(19) Europäisches Patentamt
European Patent Office
Office européen des brevets

(11) Publication number: 0 282 093 B1

# (12) EUROPEAN PATENT SPECIFICATION

(45) Date of publication of patent specification: 13.11.91 (51) Int. Cl.5: C04B 14/20

(21) Application number: 88103924.2

(22) Date of filing: 11.03.88

## (54) Aqueous suspension of delaminated vermiculite.

(30) Priority: 12.03.87 US 25121

(43) Date of publication of application:
14.09.88 Bulletin 88/37

(45) Publication of the grant of the patent:
13.11.91 Bulletin 91/46

(84) Designated Contracting States:
DE FR GB

(56) References cited:
EP-A- 0 116 413
EP-A- 0 205 281
GB-A- 2 166 127
US-A- 3 799 799
US-A- 4 455 382

(73) Proprietor: HERCULES INCORPORATED
Hercules Plaza
Wilmington Delaware 19894(US)

(72) Inventor: Lukacs, Alexander, III
5 Marklyn Court Brandywood
Wilmington Delaware 19810(US)

(74) Representative: Lederer, Franz, Dr. et al
Lederer, Keller & Riederer Patentanwälte
Lucile-Grahn-Strasse 22
W-8000 München 80(DE)

EP 0 282 093 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to aqueous suspensions of chemically delaminated vermiculite, a process for making them, and solid objects made from them.

Vermiculite ore is comprised of individual magnesium aluminum silicate lamellae bonded together by divalent metal cations, mostly magnesium. Each lamellae is a layer of magnesium aluminum silicate having a thickness of about 0.925 nm (9.25 angstroms).

In the prior art, as disclosed for example in U.S. Patents 3,325,340, 3,434,917, and 4,608,303, aqueous suspensions of discrete vermiculite platelets, each platelet several lamellae thick, have been made by contacting vermiculite ore with an aqueous alkali metal salt solution, typically of a chloride of sodium and/or lithium, or successively with a sodium salt and an organo-substituted ammonium cation (such as n-butylammonium chloride) to intercalate the ore with the ions, followed by aqueous washing to generate osmotic pressure from the ions within the mineral. U.S. Patent 4,608,303 in particular discloses the use of sodium and onium cations in succession.

The intercalated ore is allowed to swell in water to at least twice its original volume, and the swollen ore is then sheared in apparatus such as a high-speed rotary mixer into discrete platelets. Such discrete platelets are commonly referred to as chemically delaminated vermiculite platelets. Films and coatings cast from such suspensions have good flame resistant properties, but they have poor stability in water, and in fact are redispersible.

Various methods for improving the water stability of vermiculite structures are taught in the prior art. These include the incorporation of organic polymers and copolymers; soaking the structure in solutions of divalent metal cations; incorporating silicone polymer precursors; or contacting the finished structure with the vapor of certain amines or ammonia gas.

Unfortunately, none of those processes for improving the water stability of solid objects made from suspensions of vermiculite platelets have been satisfactory. Usually they involve tedious post-treatments or require the incorporation of large quantities of organic materials that degrade the high temperature properties of the structures.

According to the invention, a composition comprising chemically delaminated vermiculite platelets is characterized in that the platelets are ionically bonded to organo-substituted onium ions (i.e., ammonium phosphonium or sulfonium) that can be polymerized by radical or ionic polymerization.

A composition of vermiculite platelets according to the invention may be an aqueous suspension, or a solid object (such as a film) formed by one of the known methods for removing the water from conventional vermiculite suspensions and making solid objects.

Preferably, vermiculite platelets in an aqueous suspension according to the invention have a maximum particle size of about 0.2 mm (200 microns), more preferably a maximum size of 0.05 mm (50 microns). They preferably have a thickness of less than about 0.5 microns, more preferably less than about 0.05 microns, and they preferably have an aspect ratio (i.e., the ratio of the maximum dimension of length or breadth to thickness) of at least about 10, more preferably at least about 100.

Also according to the invention, a composition comprising chemically delaminated vermiculite platelets is characterized in that the platelets in the form of a solid object are ionically bonded to polymerized organo-substituted onium ions and are nondispersible in water. The nondispersible (cured) solid objects according to the invention are believed to comprise a single phase system of vermiculite platelets that are ionically bonded to an organic, polymeric backbone.

Also according to the invention, a process for making chemically delaminated vermiculite platelets including the steps of preparing an aqueous suspension of vermiculite ore that has been intercalated with sodium, lithium or onium cations, of swelling this intercalated ore with water, and of subjecting this same ore to a shearing step to delaminate it, is characterized in that the platelets produced are contacted in an aqueous salt solution with organo-substituted onium ions that can be polymerized by radical or ionic polymerization.

The process according to the invention can be carried out in two ways. In both, an aqueous suspension of intercalated ore made by conventionally contacting vermiculite ore with an aqueous alkali metal salt solution (preferably sodium or lithium) is the starting material, in which exchangeable ions in the ore have been replaced by the alkali metal ions.

Preferably, after washing the exchanged ore to remove excess salts, the intercalated ore is contacted with an aqueous solution of the polymerizable organo-substituted onium ions to exchange the metal ions with the polymerizable onium ions, the ore is swollen with water, and delaminated with conventional shearing equipment to form a suspension of platelets in contact with the polymerizable onium ions in the suspension.

Alternately, the alkali-metal intercalated ore is swollen with water and delaminated, or preferably the metal ions are first exchanged with the nonpolymerizable onium ions used in known processes, such as disclosed in U.S. Patent 4,608,303. In this procedure, the more expensive lithium salt

can be replaced by sodium salts, which are less effective when used alone to swell the particulate structure of the vermiculite ore. After the intercalated ore is swollen with water and delaminated, the platelets are contacted with an aqueous solution of the polymerizable organo-substituted onium ions.

Also according to the invention, the vermiculite platelets comprising a solid objects are polymerized by electron beam irradiation, or by heating.

The polymerizable organo-substituted onium ions are ammonium, sulfonium or phosphonium ions that contain one or more organic groups that can be polymerized by radical or ionic polymerization. Examples of such organo-substituted onium ions are:
crotyltriethylammonium, allylammonium,
methacryloxyethyltrimethylammonium,
3-acryloxyneopentyltrimethylammonium,
2-methacryloxyethyl-t-butylammonium,
diallylammonium, diallyldimethylammonium,
allyldimethylsulfonium,
methacrylamidopropyltrimethylammonium,
acrylamidopropyltrimethylammonium,
butenyltrimethylammonium,
vinylpyridinium ions such as N-methyl-2-vinylpyridinium,
vinylbenzyldimethylsulfonium,
vinylbenzyltrimethylammonium,
2,3-epoxypropyltrimethylammonium,
triethylvinylphosphonium, tributylvinylphosphonium,
alpha-ammonium-gamma-butyrolactone,
glycidyltrimethylammonium,
1-methyl-1-tert-butylaziridinium, and
1-ethyl-1,3,3-trimethyl azetidinium.

The anions of these onium ion salts are preferably inert anions commonly found in stable salts of these onium ions, such as halide ions; preferably they are chloride ions.

Preferably, the composition of this invention comprises from about 2 to about 150 milliequivalents of the polymerizable monomer group, most preferably from about 10 to about 100 milliequivalents of monomer per 100 grams of vermiculite. The concentration of the organic, polymerizable cation in the solution varies depending on the amount of vermiculite used and the amount of exchange desired. Preferably, an exchange for at least 10 milliequivalents of the cations is desired, so an excess amount, in moles, of the organic, polymerizable cations is needed, based on the total number of moles of cationic species bonded to the known chemically delaminated vermiculite platelets.

When the aqueous suspension of the instant invention is made by delaminating vermiculite ore using polymerizable ions, the polymerizable ion-intercalated ore is swollen with water to at least two times, preferably three to six times its original volume.

Preferred examples of the radically or ionically polymerizable, organo-substituted onium ion that can be intercalated between the layers of vermiculite ore are:
crotyltriethylammonium, allylammonium,
methacryloxyethyltrimethylammonium,
3-acryloxyneopentyltrimethylammonium,
2-methacryloxyethyl-t-butylammonium,
diallylammonium, diallyldimethylammonium,
allyldimethylsulfonium,
methacrylamidopropyltrimethylammonium,
acrylamidopropyltrimethylammonium, and
butenyltrimethylammonium.

More preferably, allylammonium and diallyldimethylammonium are used.

If sodium intercalated vermiculite, such as disclosed in the heretofore mentioned U.S. Pat Nos. 3,325,340 and 3,434,917 is used, preferably an exchange of at least about 10 milliequivalents of the sodium ions is desirable, requiring use of an excess amount, in moles, of polymerizable organo-substituted onium ion, based on the total number of moles of sodium present in the vermiculite.

The exchange step of the preferred method can be carried out at room temperature (about 25 °C); however, it is preferable to carry it out at elevated temperatures up to about 105 °C. More preferably, the exchange step is carried out under reflux temperature and conditions.

After the exchange step, the polymerizable ion-exchanged vermiculite is washed with water to remove sodium ion and excess polymerizable ion. The exchanged vermiculite is then immersed in water and allowed to swell to at least two times, and preferably three to six times its original volume. This swelling insures adequate separation of the platelets for later shearing.

After swelling, the vermiculite is sheared by known methods for shearing chemically swollen vermiculite such as disclosed in the heretofore mentioned U.S. Pat. Nos. 3,325,340 and 3,434,917. Shearing is continued until at least about half of the resulting platelets are less than about 200, preferably less than about 50 microns. More preferably, platelets having a particle size greater than about 50 microns are then removed from the aqueous suspension of platelets by known filtering methods, such as disclosed in U.S. Patent No. 4,608,303.

The aqueous suspension of vermiculite platelets according to the instant invention can be formed into solid objects, such as films, by known methods for making solid objects from known vermiculite suspensions, e.g., by casting the suspension in a mold and allowing the water to evaporate, or by an electrodeposition method, such as that disclosed in UK Patent Application GB 2 124 256A.

According to the instant invention, the vermiculite platelets comprising the solid formed objects are then polymerized by suitable polymerization techniques such as, for example, by electron beam irradiation of the solid objects, or by heating. Preferably, the aqueous suspensions of the instant invention contain conventional radical initiators or catalysts for ionic polymerization.

Electron beam initiated polymerization is performed using known electron beam generators delivering a sufficient radiation dose to the solid object. The amount of radiation required to cure the solid objects varies depending on the polymerizable ion bound to the platelets, and the thickness of the object and is determinable by those skilled in the art.

Heat initiated radical polymerization in accordance with this invention is carried out using temperature and times determinable by one skilled in the art. Generally, a temperature is selected so that the processing time is equivalent to from about 2 to about 5 half lives of the initiator. In the absence of an initiator, generally higher temperatures are required, depending on the structure of the polymerizable group.

The radical polymerization initiators and catalysts for ionic polymerization are those commonly used, for instance, as described in G. Odian "Principles of Polymerization", pages 175-177 and pages 303-307, 1970, McGraw-Hill, Inc., New York, New York.

Optional useful additives in the aqueous suspensions used to make the solid objects of the instant invention are, for example, film forming polymeric binders, inorganic and organic fibers and fillers, adhesion promoters, and plasticizers.

The following Examples are included in order to more fully explain this invention. All parts and percentages in the Examples are by weight unless indicated otherwise. Physical properties of tensile strength, modulus, and elongation recorded in the Examples are determined according to ASTM D882.

An aqueous suspension of vermiculite platelets is made according to a preferred embodiment of the instant invention, i.e., by exfoliating vermiculite with polymerizable organo-substituted onium ions. Two hundred grams of grade L-5 vermiculite (as graded per ASTM material designation C-156) is refluxed for sixteen hours in 1 liter of 2M NaCl solution (116.88 g NaCl/1 liter $H_2O$). The mixture is cooled, filtered and washed with large quantities of water. The sodium exchanged ore is then air dried. The dried ore is then refluxed for sixteen hours in aqueous 2M methacryloxyethyltrimethylammonium iodide (600 g, 2.0 moles per 1 liter water). The ore is cooled, filtered, and washed with water several times. Upon washing the ore swells approximately four-fold. The swollen ore is then sheared at high speed for 30 minutes in a High-speed mixing machine (a Waring blender). The sheared suspension is passed through a No. 325 mesh (45 micron) sieve to remove large particles. The sieved solution is then centrifuged, decanted, and the solids redispersed in a quantity of water sufficient to make a 2% by weight solids suspension.

To illustrate making a film using the suspension of vermiculite platelets of the invention, the 2% dispersion made in Example 1 is poured into an aluminum frame (to a depth of ⅛" (0.3175 cm), which is mounted on a teflon sheet using a silicone adhesive. Slow evaporation of the water at ambient temperature results in a 4 mil (0.1016 mm) thick film, which can be peeled from the teflon backing. The film is redispersible in water, has a tensile strength of 3,050 psi (20.6MPa), modulus of $7.0 \times 10^5$ psi (4.7GPa) and elongation of 0.7%. Heating at 160°C for two hours in an inert atmosphere ($N_2$) renders the film nondispersible in water (infrared spectroscopy indicates a significant reduction in the intensity of the signal at 1622 $cm^{-1}$). The cured film has a tensile strength of 4,870 psi (32.9MPa), a modulus of $16.0 \times 10^5$ psi (10.8GPa), and an elongation of 0.3%. The film contains 7.04% by weight carbon (equivalent to 11.2% by weight monomer).

To show the preparation of an organo-vermiculite film that is nondispersible in water, using diallyldimethylammonium as the organo-substituted polymerizable cation, 120g. of sodium exchanged vermiculite ore prepared as described in Example 1 is refluxed for sixteen hours in 2M aqueous diallyldimethylammonium chloride (600 mls). The ore is filtered from solution and washed several times with water. After several washings the ore swells to about twice its original volume. The swollen ore is then sheared (Tekmar Co. Super Dispax shearing device) for fifteen minutes. The resulting suspension is passed through a #325 mesh (45 micron) sieve, centrifuged, decanted, and the solids then redispersed in sufficient water to bring the suspension to 2% by weight solids. Films formed from this suspension (see Example 1 for procedure) have tensile strengths of 1,000 psi (6.7MPa), moduli of $5.2 \times 10^5$ psi (3.5GPa), elongation of 1.7% and are redispersible in water. They contain circa 1.6% by weight carbon (equivalent to 2.1% by weight diallyldimethylammonium ion). These films are then cured by exposure to electron beam radiation (20 Mrad) to make the film nondispersible in water. As total dosage increases, the tensile strengths and moduli of the films increase smoothly from a 1,000 psi (6.7MPa) tensile strength and a $5.2 \times 10^5$ psi (3.5GPa) modulus for an untreated film to a 1,900 psi (12.8MPa) tensile strength and a $10.0 \times 10^5$ psi (6.7GPa) modulus after 20 Mrad of

radiation have been administered. Film elongation values similarly are decreased from 1.7% (untreated) to 0.5% (20 Mrad dosage). Additional radiation above the 20 Mrad dose has little effect on the physical properties of the films.

A suspension and a film of the instant invention are made using vermiculite that has been exfoliated using known methods. Five hundred grams of grade L-5 vermiculite (as graded per ASTM material designation C-516) is refluxed in 175 ml of a saturated sodium chloride solution for sixteen hours. The ore is then filtered, washed with water and air dried. The sodium exchanged ore is then refluxed in 2 liters of an aqueous 2M solution of n-butylammonium chloride for six hours. The ore is filtered and washed with large quantities of water. After the ore is allowed to swell in water, it is dried overnight at 110 °C.

The n-butylammonium exchanged ore is dispersed in water and sheared using a Tekmar SD45 disperser. The suspension is then passed through a 50-micron sieve. The sieved material is centrifuged and the water is decanted. The centrifuge cake is then stirred for three days at ambient temperature in an aqueous, 2M solution of methacryloxyethyltrimethylammonium iodide (the ammonium salt is prepared by reacting methacryloxyethyldimethylamine and methyl iodide in ether).

After the exchange, the suspension is centrifuged and the aqueous layer decanted The solids are washed with water and centrifuged. The resulting ore slurry is dispersed in water to 2 wt. % of suspension. Films are cast on teflon as in Example 1 and, after evaporation of the water, cured for two hours by heating at 160 °C to make a water-nondispersible film. Films cast from the untreated n-butylammonium ore are water-dispersible.

A suspension and film are made according to the instant invention. A 20 wt. % suspension of grade L-5 vermiculite is refluxed in a saturated sodium chloride solution for four hours, cooled to room temperature, filtered, washed with distilled water (by decantation), and air dried to a damp solid. A 20 wt. % suspension of the Na exchanged ore is refluxed in a 2M aqueous solution of allyldimethylsulfonium chloride for four hours, cooled to room temperature, filtered, washed four times with distilled water (by decantation), and air dried. Twenty grams, dry weight, of the sulfonium exchanged ore is dispersed in 200 ml. distilled water, allowed to swell to six times its volume, and then it is sheared using a Tekmar SD45 disperser for two hours. The shearing vessel is cooled in an ice-water bath to maintain the temperature below 35 °C. The suspension is centrifuged (2000 rpm, 1 minute) to remove particles larger than approximately 20 microns, and the supernatant suspension is decanted from the solids. The decanted suspension is diluted to two weight percent solid and poured into an aluminum frame (to a depth of 1/8" (0.3175cm)), which is mounted on an aluminum sheet using a silicone adhesive. Slow evaporation of the water at ambient temperature results in a three mil (0.0762mm) thick film that can be peeled from the aluminum backing. The film is redispersible in water. A portion of the film is exposed to electron beam radiation (15 Mrads/side), which makes the film nondispersible in water.

Example 5 is repeated substituting allylammonium chloride for the allyldimethylsulfonium chloride. The resulting film has a tensile strength of 4400 psi (29.7MPa), a modulus of 1100 Kpsi (7.43GPa), and an elongation of 0.8%. The film is redispersible in water. A portion of the film is exposed to electron beam radiation (15 Mrads/side), which makes the film nondispersible in water. The radiated film has a tensile strength of 9470 psi (63.9MPa), a modulus of 900 Kpsi (60.8GPa), and an elongation of 1.0%.

Example 4 is repeated substituting Dow Quat 188$^R$ for the methacryloxyethyltrimethylammonium iodide and curing at 90 °C instead of 160 °C. Dow Quat 188 has the following structure:

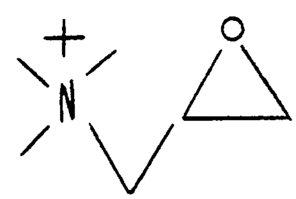

The resulting film is water-nondispersible. Films cast from the untreated n-butylammonium ore are water-dispersible.

## Claims

1. A composition comprising chemically delaminated vermiculite platelets, characterized in that the platelets are ionically bonded to organo-substituted onium ions that can be polymerized by radical or ionic polymerization.

2. A composition as claimed in claim 1, further characterized in that it is an aqueous suspension of vermiculite platelets.

3. A polymerized, composition derived from the unpolymerized composition as claimed in claim 1, characterized in that the platelets in the form of a solid object are ionically bonded to polymerized organo-substituted onium ions and are nondispersible in water.

**4.** A composition as claimed in claim 2, further characterized in that the vermiculite platelets have a maximum particle size of about 0.2 mm (200 microns).

**5.** A composition as claimed in claim 4, further characterized in that the vermiculite platelets have a maximum particle size of about 0.05 mm (50 microns).

**6.** A composition as claimed in claim 4 or 5, further characterized in that the vermiculite platelets have a thickness of less than about 0.5 microns and the ratio of their maximum dimension of length or breadth to thickness is at least about 10.

**7.** A composition as claimed in claim 6, further characterized in that the vermiculite platelets have a thickness of less than about 0.05 microns and the ratio of their maximum dimension of length or breadth to thickness is at least about 100.

**8.** A composition as claimed in any of the preceding claims, further characterized in that the organo-substituted onium ion is:
crotyltriethylammonium, allylammonium,
methacryloxyethyltrimethylammonium,
3-acryloxyneopentyltrimethylammonium,
2-methacryloxyethyl-t-butylammonium,
diallylammonium, diallyldimethylammonium,
allyldimethylsulfonium,
methacrylamidopropyltrimethylammonium,
acrylamidopropyltrimethylammonium, or
butenyltrimethylammonium.

**9.** A composition as claimed in claim 8, further characterized in that the organo-substituted onium ion is allylammonium.

**10.** A composition as claimed in claim 8, further characterized in that the organo-substituted onium ion is diallyldimethylammonium.

**11.** A process for making chemically delaminated vermiculite platelets, which includes the steps of preparing an aqueous suspension of vermiculite ore that has been intercalated with sodium, lithium or onium cations, of swelling this intercalated ore with water, and of subjecting this same ore to a shearing step to delaminate it, characterized in that the platelets produced are contacted in aqueous suspension with organo-substituted onium ions that can be polymerized by radical or ionic polymerization.

**12.** A process, in which the aqueous suspension of intercalated ore is made by contacting vermiculite ore with an aqueous solution of a salt of sodium or lithium characterized in that the intercalated ore is then contacted with an aqueous solution of the polymerizable organo-substituted onium ions, the ore is swollen with water, and delaminated with conventional shearing equipment to produce platelets in contact with the intercalated polymerizable onium ions.

**13.** A process as claimed in claim 11 or 12, further characterized in that the water is removed from the aqueous suspension of the platelets to form a solid object.

**14.** A process as claimed in claim 13, further characterized in that the vermiculite platelets comprising a solid object are polymerized by electron beam irradiation or by heating.

## Revendications

**1.** Composition comprenant des paillettes de vermiculite délaminees chimiquement, caractérisée en ce que les paillettes sont liées ioniquement à des ions onium organo-substitués qui peuvent être polymérisés par polymérisation radicalaire ou ionique.

**2.** Composition selon la revendication 1, caractérisée en outre en ce qu'elle est une suspension aqueuse de paillettes de vermiculite.

**3.** Composition polymérisée, dérivée de la composition non polymérisée selon la revendication 1, caractérisée en ce que les paillettes, sous la forme d'un objet solide, sont liées ioniquement à des ions onium organo-substitués polymérisés et sont non dispersables dans l'eau.

**4.** Composition selon la revendication 2, caractérisée en outre en ce que les paillettes de vermiculite ont une grosseur maximale de particules d'environ 0,2 mm (200 µm).

**5.** Composition selon la revendication 4, caractérisée en outre en ce que les paillettes de vermiculite ont une grosseur maximale de particules d'environ 0,05 mm (50 µm).

**6.** Composition selon la revendication 4 ou 5, caractérisée en outre en ce que les paillettes de vermiculite ont une épaisseur de moins de 0,5 µm environ, et en ce que le rapport de leur plus grande dimension en longueur ou en largeur à leur épaisseur est d'au moins 10 environ.

**7.** Composition selon la revendication 6, caractérisée en outre en ce que les paillettes de vermiculite ont une épaisseur de moins de 0,05 µm environ, et en ce que le rapport de leur plus grande dimension en longueur ou en largeur à leur épaisseur est d'au moins 100 environ.

**8.** Composition selon l'une quelconque des revendications 1 à 7, caractérisée en outre en ce que l'ion onium organo-substitué est:
le crotyltriéthylammonium, l'allylammonium,
le méthacryloxyéthyltriméthylammonium,
le 3-acryloxynéopentyltriméthylammonium.
le 2-méthacryloxyéthyl-t-butylammonium,
le diallylammonium, le diallyldiméthylammonium,
l'allyldiméthylsulfonium,
le méthacrylamidopropyltriméthylammonium,
l'acrylamidopropyltriméthylammonium ou
le buténvltriméthylammonium.

**9.** Composition selon la revendication 8, caractérisée en outre en ce que l'ion onium ,organo-substitué est l'allylammonium.

**10.** Composition selon la revendication 8, caractérisée en outre en ce que l'ion onium organo-substitué est le diallyldiméthylammonium.

**11.** Procédé de préparation de paillettes de vermiculite délaminées chimiquement, comprenant les étapes consistant à préparer une suspension aqueuse de minerai de vermiculite qui a été intercalé de cations sodium, lithium ou onium, à gonfler ce minerai intercalé avec de l'eau et à soumettre ce minerai a un traitement de cisaillement pour le délaminer, caractérisé en ce que les paillettes produites sont mises en contact en suspension aqueuse avec des ions onium organo-substitués qui peuvent être polymérisés par polymérisation radicalaire ou ionique.

**12.** Procédé, dans lequel la suspension aqueuse de minerai intercalé est preparée par la mise en contact de minerai de vermiculite avec une solution aqueuse d'un sel de sodium ou de lithium, caractérisé en ce que le minerai intercalé est ensuite mis en contact avec une solution aqueuse des ions onium organo-substitués polymérisables, le minerai est gonflé avec de l'eau et délaminé avec un équipement de cisaillement classique, pour donner des paillettes en contact avec les ions onium polymérisables intercalés.

**13.** Procédé selon la revendication 11 ou 12, caractérisé en outre en ce que l'eau est éliminée de la suspension aqueuse des paillettes, pour former un objet solide.

**14.** Procédé selon la revendication 13, caractérisé en outre en ce que les paillettes de vermiculite constituant un objet solide sont polymérisées par irradiation par un faisceau d'électrons ou par chauffage.

## Patentansprüche

**1.** Zusammensetzung umfassend chemisch in Schichten abgeblätterte Vermiculit-Plättchen, dadurch gekennzeichnet, daß die Plättchen ionisch an organo-substituierte-Oniumionen gebunden sind, die durch Radikal- oder ionische Polymerisation polymerisiert werden können.

**2.** Zusammensetzung nach Anspruch 1, weiter dadurch gekennzeichnet, daß sie eine wässrige Suspension von Vermiculit-Plättchen ist.

**3.** Von der nicht-polymerisierten Zusammensetzung abgeleitete polymerisierte Zusammensetzung nach Anspruch 1, dadurch gekennzeichnet, daß die Plättchen in Form eines festen Gegenstands ionisch an polymerisierte, organo-substituierte-Oniumionen gebunden und nicht in Wasser dispergierbar sind.

**4.** Zusammensetzung nach Anspruch 2, weiter dadurch gekennzeichnet, daß die Vermiculit-Plättchen eine maximale Teilchengröße von etwa 0,2 mm (200 Mikron) aufweisen.

**5.** Zusammensetzung nach Anspruch 4, weiter dadurch gekennzeichnet, daß die Vermiculit-Plättchen eine maximale Teilchengröße von etwa 0,05 mm (50 Mikron) aufweisen.

**6.** Zusammensetzung nach Anspruch 4 oder 5, weiter dadurch gekennzeichnet, daß die Vermiculit-Plättchen eine Dicke von weniger als etwa 0,5 Mikron aufweisen und das Verhältnis ihrer größten Längen- oder Breitenabmessung zur Dicke wenigstens etwa 10 ist.

**7.** Zusammensetzung nach Anspruch 6, weiter dadurch gekennzeichnet, daß die Vermiculit-Plättchen eine Dicke von weniger als etwa 0,05 Mikron aufweisen und das Verhältnis ihrer größten Längen- oder Breitenabmessung zur Dicke wenigstens etwa 100 ist.

**8.** Zusammensetzung nach einem der vorhergehenden Ansprüche, weiter dadurch gekennzeichnet, daß das organosubstituierte-Oniumion : Crotyltriethylammonium, Allylammonium, Methacryloxyethyltrimethylammonium, 3-Acryloxyneopentyltrimethyl ammonium, 2-Methacryloxyethyl-t-butylammonium, Diallylammonium, Diallyldimethylammonium, Allyldimethylsulfonium, Methacrylamidopropyltrimethylammonium, Acrylamidopropyltrimethylammonium oder Butenyltrimethylammonium ist.

**9.** Zusammensetzung nach Anspruch 8, weiter dadurch gekennzeichnet, daß das organosubstituierte-Oniumion Allylammonium ist.

**10.** Zusammensetzung nach Anspruch 8, weiter dadurch gekennzeichnet, daß das organosubstituierte-Oniumion Diallyldimethylammonium ist.

**11.** Verfahren zur Herstellung von chemisch in Schichten abgeblätterten Vermiculit-Plättchen, das die Schritte des Herstellens einer wässrigen Suspension von Vermiculit-Erz, dem Natrium, Lithium oder -Oniumkationen eingelagert wurden, Quellen des eingelagerten Erzes mit Wasser und Unterwerfen desselben Erzes unter einen Scherschritt, um es in Schichten abzublättern, umfaßt, dadurch gekennzeichnet, daß die hergestellten Plättchen in wässriger Suspension mit organo-substituierten-Oniumionen, die durch Radikal- oder ionische Polymerisation polymerisiert werden können, in Kontakt gebracht werden.

**12.** Verfahren, bei dem die wässrige Suspension von eingelagertem Erz durch In-Kontakt-Bringen von Vermiculit-Erz mit einer wässrigen Lösung eines Natrium-oder Lithiumsalzes hergestellt wird, dadurch gekennzeichnet, daß das eingelagerte Erz dann mit einer wässrigen Lösung der polymerisierbaren, organosubstituierten-Oniumionen in Kontakt gebracht wird, das Erz mit Wasser gequollen und mit einer herkömmlichen Scherausrüstung in Schichten abgeblättert wird, um Plättchen in Kontakt mit den eingelagerten, polymerisierbaren-Oniumionen herzustellen.

**13.** Verfahren nach Anspruch 11 oder 12, weiter dadurch gekennzeichnet, daß das Wasser aus der wässrigen Suspension der Plättchen entfernt wird, um einen festen Gegenstand zu bilden.

**14.** Verfahren nach Anspruch 13, weiter dadurch gekennzeichnet, daß die einen festen Gegenstand umfassenden Vermiculit-Plättchen durch Elektronenstrahl-Bestrahlung oder Erhitzen polymerisiert werden.